# EUROPEAN PATENT APPLICATION

(11) **EP 4 013 153 A1**
(43) Date of publication of application: **15.06.2022**
(21) Application number: 20852080.9
(22) Date of filing: 04.08.2020
(51) Int. Cl.: H04W 72/04, H04W 52/02

(54) **ENERGY-SAVING METHOD AND DEVICE**

(30) Priority: 09.08.2019 CN 201910732558
(71) Applicant: ZTE Corporation, Shenzhen, Guangdong 518057 (CN)
(72) Inventor: FEI, Peiyan, Shenzhen, Guangdong 518057 (CN)
(74) Representative: Ipsilon
(86) International application number: PCT/CN2020/106731
(87) International publication number: WO 2021/027619

(57) **Abstract**

The present disclosure provides an energy saving method, which is applied to a base station side of a wireless network system, and includes: allocating a first antenna resource to transmission of a first signal, and allocating a second antenna resource to transmission of a second signal; and keeping the first antenna resource on all the time or closing the first antenna resource merely in a preset time slot, and closing a part of the second antenna resource when it is detected that an energy saving condition is met.

## Description

### TECHNICAL FIELD

The present disclosure relates to, but is not limited to, the field of wireless communication technology.

### BACKGROUND

At present, the 5G (5th-Generation) technology is the widely discussed and expected network technology, and many countries are considering 5G commercial network deployment. A 5G system can adopt network slicing technology to achieve different network purposes, and is a basic network for the Internet of Everything.

Compared with the 4G (4th-Generation) mobile communication, the 5G mobile communication system supports larger bandwidths, more transmission links, higher data transmission rates, and more service types, and thus are endowed with the characteristics that the previous networks cannot realize, such as large bandwidth, massive connection, and low latency. The support of those characteristics inevitably causes an important problem, that is, energy consumption. For example, taking Enhanced Mobile Broadband (eMBB) service as an example, if a cell coverage in the 5G mobile communication is to be kept the same as that in the 4G mobile communication, the transmit power of a 5G base station may be up to 10 times that of a 4G base station. Therefore, energy consumption is an urgent problem to be solved.

### SUMMARY

An embodiment of the present disclosure provides an energy saving method, which is applied to a base station side of a wireless network system, and includes: allocating a first antenna resource to transmission of a first signal, and allocating a second antenna resource to transmission of a second signal; and keeping the first antenna resource on all the time or closing the first antenna resource merely in a preset time slot, and closing a part of the second antenna resource when it is detected that an energy saving condition is met.

An embodiment of the present disclosure provides an energy saving device, including: a memory, a processor and a computer program which is stored on the memory and executable by the processor. When the computer program is executed by the processor, the processor performs the energy saving method according to the present disclosure.

An embodiment of the present disclosure provides a computer-readable storage medium having a computer program stored thereon. When the computer program is executed by a processor, the processor performs the energy saving method according to the present disclosure.

### BRIEF DESCRIPTION OF DRAWINGS

FIG. 1 is a flowchart illustrating an energy saving method according to the present disclosure; and
FIG. 2 is a schematic diagram of an energy saving device according to the present disclosure.

### DETAIL DESCRIPTION OF EMBODIMENTS

In order to make the objectives, technical solutions and advantages of the present disclosure clearer, embodiments of the present disclosure are further described in detail below with reference to the accompanying drawings. It should be noted that the embodiments of the present disclosure and the features thereof can be arbitrarily combined with one another if no conflict is incurred.

The operations illustrated in the flowchart of the drawings may be performed in a computer system such as a set of computer-executable instructions. Although a logical order is illustrated in the flowchart, the operations illustrated or described may be performed in an order different from that described herein in some cases.

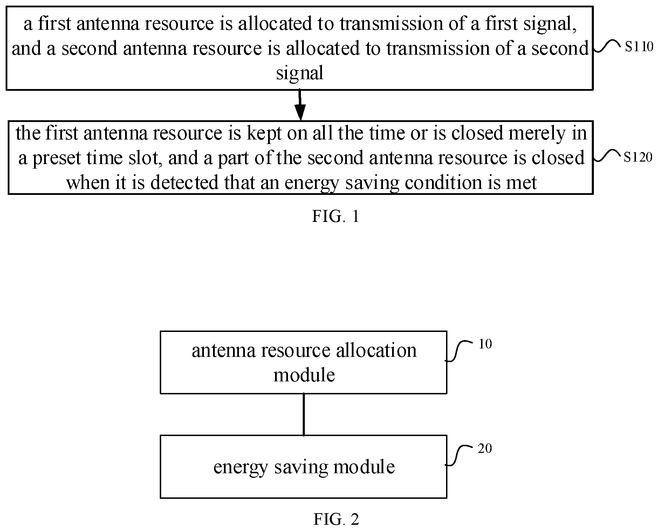

FIG. 1 is a flowchart illustrating an energy saving method according to the present disclosure.

As shown in FIG. 1, the present disclosure provides an energy saving method, which is applied to a base station side of a wireless network system and includes the following operations S110 and S120.

In operation S110, a first antenna resource is allocated to transmission of a first signal, and a second antenna resource is allocated to transmission of a second signal.

In operation S120, the first antenna resource is kept on all the time or is closed merely in a preset time slot, and a part of the second antenna resource is closed when it is detected that an energy saving condition is met.

In the above embodiment, by allocating different antenna resources to the first signal and the second signal, configuring the first antenna resource to be kept on all the time or be closed merely in the preset time slot, and configuring the second antenna resource to be partially closed when it is detected that the energy saving condition is met, energy consumption of a base station system can be saved with a minimum effect on performance of the wireless system.

In the present disclosure, the first antenna resource and the second antenna resource include completely different antennas or ports, or an intersection of the antennas or ports included in the first antenna resource and the second antenna resource exists.

In the present disclosure, transmit power of the antenna or the port in the first antenna resource or the second antenna resource may be configured according to a type of the signal transmitted by the antenna or the port. That is, the transmit power of the same antenna or port may be configured to vary during transmission of different signals.

In the present disclosure, the transmit power of the antenna or the port may be configured through upper layer signaling.

In the present disclosure, the first signal and the second signal are used in different ways.

In the present disclosure, the first signal is a signal used for measurement at a terminal side.

In the present disclosure, the first signal includes a downlink physical reference signal.

In the present disclosure, the downlink physical reference signal includes at least one of: a Synchronization Signal (SS), a Channel-State Information Reference Signal (CSI-RS) or a Phase-Tracking Reference Signal (PT-RS).

In the present disclosure, the second signal includes at least one of: a data signal or a reference signal of the data signal.

In the present disclosure, the first antenna resource includes: at least one port, or at least one antenna; and the second antenna resource includes: a plurality of ports, or a plurality of antennas.

In the present disclosure, meeting the energy saving condition includes at least one of: determining that the number of antennas needed by the terminal side is less than the number of current antennas according to channel quality information reported by the terminal, or determining that the number of ports needed by the terminal side is less than the number of current ports according to the channel quality information reported by the terminal; or measuring an uplink data channel to obtain channel quality information of uplink data, and determining that the number of uplink receiving antennas needed by a network side is less than the number of current antennas according to the channel quality information of uplink data, or determining that the number of uplink receiving ports needed by the network side is less than the number of current ports according to the channel quality information of uplink data.

In the present disclosure, the channel quality information reported by the terminal may include a Rank Indication (RI).

For example, when the RI reported by the terminal is less than the number of current antennas, it is determined that the number of antennas needed by the terminal side is less than the number of current antennas.

In the present disclosure, the channel quality information of the uplink data measured at the network side includes the RI.

For example, when the RI of the uplink data measured at the network side is less than the number of current antennas, it is determined that the number of the receiving antennas needed by the network side is less than the number of current antennas.

In the present disclosure, the operation of closing a part of the second antenna resource when it is detected that the energy saving condition is met includes: determining an uplink receiving antenna or port which needs to be opened in the second antenna resource, and closing the remaining uplink receiving antennas or ports in the second antenna resource; and/or determining a downlink data transmitting antenna or port which needs to be opened in the second antenna resource, and closing the remaining downlink data transmitting antennas or ports in the second antenna resource.

In the present disclosure, the number of the uplink receiving antennas or ports which need to be opened in the second antenna resource satisfies the following condition: the number of the uplink receiving antennas or ports which need to be opened in the second antenna resource is greater than or equal to the maximum RI for uplink data transmission; or the number N of the uplink receiving antennas or ports which need to be opened in the second antenna resource is greater than or equal to the maximum RI for the uplink data transmission, and satisfies a requirement of the number m of users of multi-user pairing supported by the system: *N* = *km* , where k is an integer greater than 0.

For example, when the system supports multi-user pairing, if the number of users of multi-user pairing supported by the system is 2, the number of the uplink receiving antennas or ports which need to be opened in the second antenna resource should be a multiple of 2; and if the number of users of multi-user pairing supported by the system is 4, the number of the uplink receiving antennas or ports which need to be opened in the second antenna resource should be a multiple of 4.

In the present disclosure, the number of the downlink data transmitting antennas or ports which need to be opened in the second antenna resource is greater than or equal to the RI reported by the terminal.

In the present disclosure, the method may further include: re-opening the closed part of the second antenna resource when it is detected that a utilization rate of the second antenna resource is greater than a preset threshold.

In the above embodiments, by allocating different antenna resources to the first signal used for measurement and the second signal used for data transmission at the terminal side, keeping the first antenna resource used for measurement on all the time or closing the first antenna resource merely in the preset time slot, and closing a part of the second antenna resource used for data transmission when it is detected that the energy saving condition is met, the energy consumption of the base station system can be saved with minimum effects on cell coverage, data reception by the terminal, and data transmission by the base station.

FIG. 2 is a schematic diagram of an energy saving device according to the present disclosure.

As shown in FIG. 2, the present disclosure provides an energy saving device, which is applied to a base station side of a wireless network system, and includes an antenna resource allocation module 10 and an energy saving module 20.

The antenna resource allocation module 10 is configured to allocate a first antenna resource to transmission of a first signal and allocate a second antenna resource to transmission of a second signal.

The energy saving module 20 is configured to keep the first antenna resource on all the time or close the first antenna resource merely in a preset time slot, and close a part of the second antenna resource when it is detected that an energy saving condition is met.

In the present disclosure, the first signal and the second signal are used in different ways.

In the present disclosure, the first signal is a signal used for measurement at a terminal side.

In the present disclosure, the second signal includes at least one of: a data signal or a reference signal of the data signal.

In the present disclosure, the first antenna resource includes: at least one port, or at least one antenna; and the second antenna resource includes: a plurality of ports, or a plurality of antennas.

In the present disclosure, the first signal includes a downlink physical reference signal.

In the present disclosure, meeting the energy saving condition includes at least one of: determining that the number of antennas needed by the terminal side is less than the number of current antennas according to channel quality information reported by the terminal, or determining that the number of ports needed by the terminal side is less than the number of current ports according to the channel quality information reported by the terminal; or measuring an uplink data channel to obtain channel quality information of uplink data, and determining that the number of uplink receiving antennas needed by a network side is less than the number of current antennas according to the channel quality information of uplink data, or determining that the number of uplink receiving ports needed by the network side is less than the number of current ports according to the channel quality information of uplink data.

In the present disclosure, the energy saving module is configured to close a part of the second antenna resource when it is detected that the energy saving condition is met in the following way: determining an uplink receiving antenna or port which needs to be opened in the second antenna resource, and closing the remaining uplink receiving antennas or ports in the second antenna resource; and/or determining a downlink data transmitting antenna or port which needs to be opened in the second antenna resource, and closing the remaining downlink data transmitting antennas or ports in the second antenna resource.

In the present disclosure, the number of the uplink receiving antennas or ports which need to be opened in the second antenna resource satisfies the following condition: the number of the uplink receiving antennas or ports which need to be opened in the second antenna resource is greater than or equal to the maximum RI for uplink data transmission; or the number N of the uplink receiving antennas or ports which need to be opened in the second antenna resource is greater than or equal to the maximum RI for the uplink data transmission, and satisfies a requirement of the number m of users of multi-user pairing supported by the system: *N* = *km* , where k is an integer greater than 0.

In the present disclosure, the number of the downlink data transmitting antennas or ports which need to be opened in the second antenna resource is greater than or equal to the RI reported by the terminal.

The energy saving module is further configured to re-open the closed part of the second antenna resource when it is detected that a utilization rate of the second antenna resource is greater than a preset threshold.

The present disclosure further provides an energy saving device, including: a memory, a processor and a computer program which is stored on the memory and executable by the processor. When the computer program is executed by the processor, the processor performs the energy saving method according to the embodiments of the present disclosure.

The present disclosure further provides a computer-readable storage medium having a computer program stored thereon. When the computer program is executed by a processor, the processor performs the energy saving method according to the embodiments of the present disclosure.

It should be understood by those of ordinary skill in the art that the functional modules/units in all or some of the operations, the systems and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

It should be noted that the present disclosure has various other embodiments, those of ordinary skill in the art can make various modifications and variations to the present disclosure without departing from the spirit and essence of the present disclosure, and those modifications and variations should be included in the scope of the appended claims.

## Claims

1. An energy saving method applied to a base station side of a wireless network system, comprising:
allocating a first antenna resource to transmission of a first signal, and allocating a second antenna resource to transmission of a second signal; and
keeping the first antenna resource on all the time or closing the first antenna resource merely in a preset time slot, and closing a part of the second antenna resource when it is detected that an energy saving condition is met.

2. The method of claim 1, wherein
the first signal and the second signal are used in different ways.

3. The method of claim 2, wherein
the first signal is a signal used for measurement at a terminal side, and
the second signal comprises at least one of: a data signal or a reference signal of the data signal.

4. The method of claim 1, wherein
meeting the energy saving condition comprises at least one of:
determining that the number of antennas needed by a terminal side is less than the number of current antennas according to channel quality information reported by the terminal, or determining that the number of ports needed by the terminal side is less than the number of current ports according to the channel quality information reported by the terminal; or
measuring an uplink data channel to obtain channel quality information of uplink data, and determining that the number of uplink receiving antennas needed by a network side is less than the number of current antennas according to the channel quality information of uplink data, or determining that the number of uplink receiving ports needed by the network side is less than the number of current ports according to the channel quality information of uplink data.

5. The method of claim 1, wherein closing a part of the second antenna resource when it is detected that the energy saving condition is met comprises:
determining an uplink receiving antenna or port which needs to be opened in the second antenna resource, and closing the remaining uplink receiving antennas or ports in the second antenna resource; and/or
determining a downlink data transmitting antenna or port which needs to be opened in the second antenna resource, and closing the remaining downlink data transmitting antennas or ports in the second antenna resource.

6. The method of claim 5, wherein
the number of the uplink receiving antennas or ports which need to be opened in the second antenna resource satisfies the following condition:
the number of the uplink receiving antennas or ports which need to be opened in the second antenna resource is greater than or equal to the maximum Rank Indication, called RI, for uplink data transmission; or
the number N of the uplink receiving antennas or ports which need to be opened in the second antenna resource is greater than or equal to the maximum RI for the uplink data transmission, and satisfies a requirement of the number m of users of multi-user pairing supported by the system: *N* = *km,* where k is an integer greater than 0.

7. The method of claim 5, wherein
the number of the downlink data transmitting antennas or ports which need to be opened in the second antenna resource is greater than or equal to an RI reported by a terminal.

8. The method of claim 1, further comprising:
re-opening the closed part of the second antenna resource when it is detected that a utilization rate of the second antenna resource is greater than a preset threshold.

9. An energy saving device, comprising: a memory, a processor and a computer program which is stored on the memory and executable by the processor, wherein, when the computer program is executed by the processor, the processor performs the energy saving method of any one of claims 1 to 8.

10. A computer-readable storage medium having a computer program stored thereon, wherein, when the computer program is executed by a processor, the processor performs the energy saving method of any one of claims 1 to 8.
